# EUROPÄISCHE PATENTANMELDUNG

(11) **EP 1 199 162 A1**
(43) Veröffentlichungstag der Anmeldung: **24.04.2002**
(21) Anmeldenummer: 01124729.3
(22) Anmeldetag: 17.10.2001
(51) Int. Cl.: B32B 27/32, B65D 85/50

(54) **Transparente Blumenverpackung aus Kunststoff-Folienmaterial**

(30) Priorität: 19.10.2000 DE 20017909 U
(71) Anmelder: Wentus Kunststoff GmbH, 37671 Höxter (DE)
(72) Erfinder: Bodo, Cordes, 37671 Höxter (DE); Bernd, Klarholz Dr., 37671 Höxter (DE)
(74) Vertreter: Gesthuysen, von Rohr & Eggert

(57) **Zusammenfassung**

Gegenstand der Erfindung ist eine transparente Blumenverpackung (1), insbesondere in Form einer an beiden Enden offenen Hülse, umfassend im wesentlichen transparentes, mehrlagig coextrudiertes Cast-PP-Kunststoff-Folienmaterial, wobei zumindest drei Lagen vorgesehen sind, nämlich zwei dünne Außenlagen (2; 3) aus Random-Copolymeren und eine dickere mittlere Lage (4) aus einem PP-Homopolymer. Diese ist dadurch gekennzeichnet, daß die mittlere Lage (4) aus einem hochkristallinen PP-Homopolymer besteht und daß das mehrlagige, coextrudierte Folienmaterial insgesamt hochsteif ist.

## Beschreibung

Gegenstand der Erfindung ist eine transparente Blumenverpackung mit den Merkmalen des Oberbegriffs von Anspruch 1.

Eine Blumenverpackung ist in der Regel eine an beiden Enden offene, häufig trichterförmige Hülse aus einem Kunststoff-Folienmaterial (beispielsweise EP 0 369 549 B1). Blumenverpackungen werden täglich zu hunderttausenden als extrem preisgünstige Wegwerfprodukte eingesetzt, einerseits um Blumen auf dem Weg vom Hersteller zum Verbraucher zu schützen, andererseits auch als Schmuckverpackungen. Blumenverpackungen sind dabei für Schnittblumen ebenso aus Kunststoff-Folienmaterial hergestellt wie für Topfpflanzen oder Blumentöpfe als solche. Bei Topfpflanzen und Blumentöpfen ist die Hülse aus Kunststoff-Folienmaterial häufig am Boden mit einer zusätzlichen Schweißnaht geschlossen, um der höheren mechanischen Beanspruchung der Schweißnähte zu entsprechen.

Blumenverpackungen sind leicht opak aus HDPE (High Density Polyethylen und LDPE (Low Density Polyethylen) bekannt, darauf bezieht sich die vorliegende Erfindung nicht.

Transparente Blumenverpackungen werden zunächst aus biaxial orientierten Polypropylen-Folien (BOPP) hergestellt. Eine biaxial orientierte Polypropylen-Folie wird in einem zweistufigen Prozeß hergestellt. Charakteristisch für BOPP-Folien, die typischerweise in Gesamtdicken von 20 µm bis 50 µm geliefert werden, ist deren hohe Reißfestigkeit sowie die vergleichsweise hohe Steifigkeit.

BOPP-Folien haben aufgrund ihres Herstellungsverfahrens vergleichsweise schlechte Schweißeigenschaften bei Trennahtschweißung. Blumenverpakkungen aus BOPP-Folien reißen daher an den Trennähten leichter auf als ungereckte Folien. Für beispielsweise Topfpflanzen vermeidet man daher lieber die Verwendung von BOPP-Folien wegen der Reißgefahr der Schweißnähte.

Als Alternative werden transparente Blumenverpackungen auch aus sofort nach dem Austrag aus der Schmelze in Längsrichtung auf die endgültige Foliendicke verstreckten Polypropylen-Folien hergestellt, aus sogenanntem Cast-PP-Folienmaterial. Cast-PP-Folienmaterial wird einlagig sowie mehrlagig extrudiert. Bei einlagiger Extrusion bildet sich bei niedrigkristallinem Polypropylen bereits eine glänzende, glatte Außenfläche. Mehrlagig extrudierte Folien zeigen niedrigkristallines PP-Homopolymer in der mittleren Lage und dünne Außenlagen aus insbesondere Ethylen-Random-Copolymeren. Dadurch ergeben sich noch glänzendere, glatte Außenflächen und eine vorzügliche Klarheit der Folien.

Blumenverpackungen aus Cast-PP-Folienmaterial zeichnen sich durch hohe Dehnfähigkeit und geringe Spleißempfindlichkeit aus, die hergestellten Trennähte haben sehr gute Nahtfestigkeiten. Mehrlagig extrudiert mit Random-Copolymeren in den Außenlagen ergibt sich ein nochmals verbesserter Glanz mit vorzüglicher Transparenz der Folien, insbesondere für Blumenverpackungen sehr attraktiv.

Nachteilig bei Cast-PP-Folienmaterial ist dessen geringe Steifigkeit und Festigkeit. Die aus solchem Folienmaterial hergestellten Blumenverpackungen wirken weich und deshalb nicht so ansprechend wie Blumenverpackungen aus BOPP-Folienmaterial.

Der Erfindung liegt die Aufgabe zugrunde, eine Blumenverpackung anzugeben, die die Vorteile beider bisher bekannter transparenter Blumenverpackungen miteinander verbindet, ohne deren Nachteile zu haben.

Die zuvor aufgezeigte Aufgabe ist bei einer Blumenverpackung mit den Merkmalen des Oberbegriffs von Anspruch 1 durch die Merkmale des kennzeichnenden Teils von Anspruch 1 gelöst. Anstelle eines einfachen niedrigkristallinen Polypropylen-Homopolymers wird erfindungsgemäß in der mittleren Lage ein hochkristallines Polypropylen-Homopolymer eingesetzt. Die mehrlagig coextrudierte Cast-PP-Folie wird also in der mittleren Lage mit einem besonderen Material, nämlich einem hochkristallinen PP-Homopolymer, ausgerüstet, was zu hochsteifen Folien führt. Ein solches PP-Homopolymer ist am Markt für andere Anwendungen erhältlich (beispielsweise unter der Bezeichnung ADSTIF® ADXP von Montell Polyolefins Company N.V.).

Aufgrund des eingesetzten hochsteifen Kunststoff-Folienmaterials mit hochkristallinem Polypropylen-Homopolymer in der Mittellage der mindestens dreilagig coextrudierten Kunststoff-Folie zeichnet sich die erfindungsgemäße Blumenverpackung insgesamt durch eine hohe Steifigkeit aus, die der Steifigkeit von aus BOPP-Folien hergestellten Blumenverpackungen nahekommt. Die schlechteren Schweißeigenschaften von kochkristallinem PP-Homopolymer und die geringere Klarheit gegenüber niedrigkristallinem PP-Homopolymer werden ausgeglichen durch die dünnen Außenlagen aus Random-Copolymeren. Diese führen zu den gewünschten Schweißeigenschaften bei Trennahtschweißung, es ergibt sich eine hervorragende Qualität der bei diesen Blumenverpackungen realisierten Trennähte, diese reißen praktisch nicht aus. Außerdem ergibt sich durch die Außenlagen aus Random-Copolymeren eine gute Klarheit des Folienmaterials der Blumenverpackung mit glänzenden, glatten Außenflächen.

Für die dünnen Außenlagen aus Random-Copolymeren kann man bekannte Ethylen-Copolymere einsetzen. Man kennt diese in bestimmten Konzentrationsstufen( 4%, 6%, 8%). Je höher der Prozentsatz ist, desto glatter und glänzender sind die Außenflächen und desto besser sind die Schweißeigenschaften. Die Steifigkeit des Folienmaterials insgesamt nimmt aber mit ansteigenden Prozentsätzen ab.

Zur Definition eines hochkristallinen PP-Homopolymers eignet sich der Kristallinitätsgrad. Es ist eine Kristallinität von mehr als 60% zu fordern. Außerdem ist auch die Taktizität eine interessante Meßgröße. Es empfiehlt sich, ein PP-Homopolymer mit einem ataktischen Anteil von 3% oder weniger einzusetzen.

Besonders bevorzugt ist nun eine Ausführung einer erfindungsgemäßen Blumenverpackung, bei der die Außenlagen aus Buten-Random-Copolymeren bestehen. Buten anstelle von Ethylen führt bei gleich guten Schweißeigenschaften zu einer deutlich höheren Steifigkeit des Folienmaterials insgesamt sowie zu vergleichbaren Werten von Klarheit und Glanz.

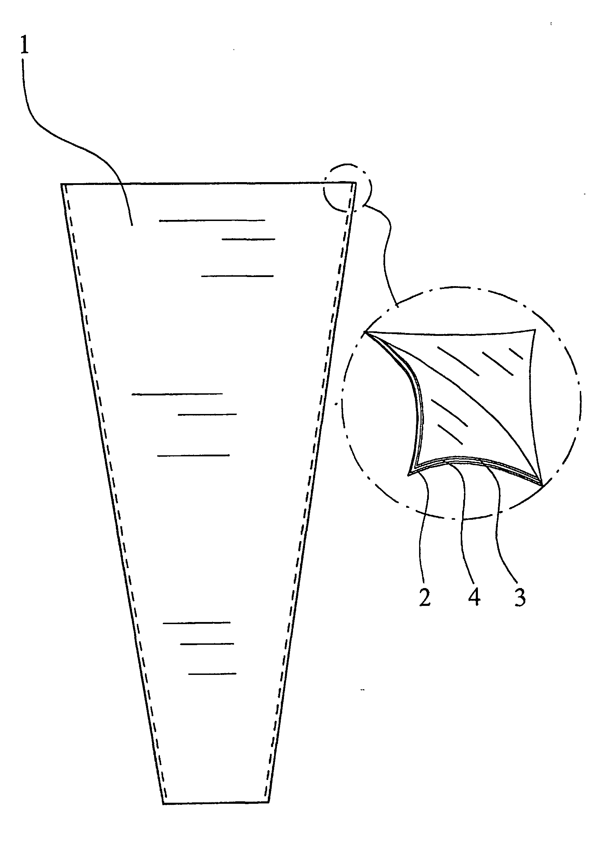

Bevorzugte Ausgestaltungen und Weiterbildungen der erfindungsgemäßen Blumenverpackung sind Gegenstand der Unteransprüche. Im übrigen ergeben sich weitere Besonderheiten der Erfindung auch aus der nachfolgenden Erläuterung eines bevorzugten Ausführungsbeispiels einer erfindungsgemäßen Blumenverpackung anhand der Zeichnung. Die einzige Figur der Zeichnung zeigt eine Blumenverpackung in Form eines typischen Blumentrichters für Schnittblumen.

Die in der einzigen Figur dargestellte Blumenverpackung 1 hat hier die Form einer an beiden Enden offenen, trichterförmigen Hülse. Sie besteht aus einem an den Rändern trennahtverschweißten Kunststoff-Folienmaterial. Hierbei handelt es sich um ein mehrlagig coextrudiertes Cast-PP-Folienmaterial. Zumindest drei Lagen sind hier vorgesehen, nämlich zwei dünne Außenlagen 2, 3 aus Random-Copolymeren und eine dickere mittlere Lage 4 aus einem PP-Homopolymer. Dieses ist ein hochkristallines PP-Homopolymer.

Nach bevorzugter Lehre ist im dargestellten Ausführungsbeispiel vorgesehen, daß die Außenlagen 2, 3 aus Buten-Random-Copolymeren bestehen.

Für die Lagenfolge 2, 4, 3 ergibt sich bevorzugt ein Dickenverhältnis von 10/80/10 bis 20/60/20.

Schließlich ergibt sich für die Gesamtdicke des Folienmaterials der erfindungsgemäßen Blumenverpackung 1 ein Bereich von 10 bis 100 µm, insbesondere von 20 bis 50 µm, vorzugsweise von etwa 25 bis 30 bzw. 35 bis 40 µm. Konkrete Ausführungsbeispiele, die bereits realisiert worden sind, sind Blumenverpackungen 1 aus Kunststoff-Folienmaterial des beschriebenen Aufbaus von 27 µm bzw. von 37 µm.

Untersuchungen wurden auch angestellt hinsichtlich der Eigenschaften des für die Blumenverpackung 1 verwendeten Folienmaterials bezüglich des E-Moduls im elastischen Bereich der Dehnung. Dieser ist in einem Beispiel einer Folie von einer Gesamtdicke von 38 µm bestimmt worden als Sekantmodul nach EN ISO 527 Teil 3 mit Werten zwischen 1060 und 1260 N/mm², insbesondere zwischen 1160 und 1200 N/mm², Mittelwert ca. 1186 N/mm². Demgegenüber hatte eine entsprechende dreilagige Folie in Standardmaterial in gleicher Weise ausgemessen einen E-Modul zwichen 823 und 960 N/mm² mit einem Mittelwert von ca. 889 N/mm². Mit der Lehre der Erfindung erhält man also eine deutliche Erhöhung des E-Moduls unter Beibehaltung sonstiger interessanter Eigenschaften der Blumenverpackung.

Das hochkristalline PP-Homopolymer der mittleren Lage 4 hat im dargestellten Ausführungsbeispiel als Granulat einen Schmelzpunkt von etwa 170 °C. Typische spezifische Dichten liegen bei 0,9 g/cm³.

Für die weiteren Eigenschaften eines besonders bevorzugten PP-Homopolymers für die mittlere Lage 4 der Blumenverpackung 1 darf auf die weiteren Schutzansprüche 6 bis 13 verwiesen werden. Dort ist jeweils mit angegeben, nach welcher durch Normen anerkannten Meßmethode der entsprechende Parameter des Materials der Blumenverpackung 1 ermittelt worden ist. Der Begriff "Maschinenrichtung" bezeichnet dabei die Extrusionsrichtung der Maschine, die dazu querliegende Richtung ist mit Querrichtung bezeichnet.

Die erfindungsgemäße Blumenverpackung 1 ist im Ergebnis in der Praxis außerordentlich zweckmäßig einsetzbar und erfüllt alle Anforderungen der Verwender bei hohem qualitativem Eindruck für den Verbraucher.

## Patentansprüche

1. Transparente Blumenverpackung (1), insbesondere in Form einer an beiden Enden offenen Hülse, umfassend im wesentlichen transparentes, mehrlagig coextrudiertes Cast-PP-Kunststoff-Folienmaterial,
wobei zumindest drei Lagen vorgesehen sind, nämlich zwei dünne Außenlagen (2; 3) aus Random-Copolymeren und eine dickere mittlere Lage (4) aus einem PP-Homopolymer,
**dadurch gekennzeichnet,**
**daß** die mittlere Lage (4) aus einem hochkristallinen PP-Homopolymer besteht und
**daß** das mehrlagige, coextrudierte Folienmaterial insgesamt hochsteif ist.

2. Blumenverpackung nach Anspruch 1, **dadurch gekennzeichnet, daß** die mittlere Lage (4) aus PP-Homopolymer mit einem Kristallinitätsgrad von mehr als 60 % besteht.

3. Blumenverpackung nach Anspruch 1 oder 2, **dadurch gekennzeichnet, daß** das hochkristalline PP-Homopolymer der mittleren Lage (4) im Rohzustand weniger als 3 % ataktische Anteile aufweist.

4. Blumenverpackung nach einem der Ansprüche 1 bis 3, **dadurch gekennzeichnet, daß** die Außenlagen (2; 3) aus Buten-Random-Copolymeren bestehen.

5. Blumenverpackung nach einem der Ansprüche 1 bis 4, **dadurch gekennzeichnet, daß** die Lagenfolge (2; 4; 3) ein Dickenverhältnis 10/80/10 bis 20/60/20 aufweist.

6. Blumenverpackung nach einem der Ansprüche 1 bis 5, **dadurch gekennzeichnet, daß** die Gesamtdicke des Folienmaterials der Blumenverpackung (1) 10 bis 100 µm, insbesondere etwa 20 bis 50 µm, vorzugsweise 25 bis 30 µm bzw. 35 bis 40 µm, beträgt.

7. Blumenverpackung nach Anspruch 6, **dadurch gekennzeichnet, daß** das Folienmaterial bei einer Gesamtdicke von 38 µm einen E-Modul (bestimmt als Sekantmodul nach EN ISO 527 Teil 3) von 1060 bis 1260 N/mm², vorzugsweise von 1160 bis 1260 N/ mm², aufweist.

8. Blumenverpackung nach einem der Ansprüche 1 bis 7, **dadurch gekennzeichnet, daß** der Vicat-Erweichungspunkt (9,8 N) des PP-Homopolymers der mittleren Lage (4) (bestimmt nach ISO 306/A) bei mindestens 155 °C, vorzugsweise bei 156 °C bis 160 °C, liegt und/oder
daß die Wärmefestigkeitstemperatur (0,46 MPa) des PP-Homopolymers der mittleren Lage (4) (bestimmt nach ISO 75/B) mindestens 116 °C, vorzugsweise 117 °C bis 126 °C, beträgt und/oder
daß das PP-Homopolymer der mittleren Lage (4), einlagig extrudiert, bei einer Dicke von 50 µm einen Tangentenmodul in Maschinenrichtung (bestimmt nach ASTM 882-90) von mindestens 800 MPa, vorzugsweise mindestens 1000 MPa, und in Querrichtung von mindestens 800 MPa, vorzugsweise mindestens 900 MPa, aufweist.

9. Blumenverpackung nach einem der Ansprüche 1 bis 8, **dadurch gekennzeichnet, daß** das PP-Homopolymer der mittleren Lage (4), einlagig extrudiert, bei einer Dicke von 50 µm eine Zugfestigkeit in Maschinenrichtung wie in Querrichtung (bestimmt nach ASTM 882-90) von mindestens 25 MPa aufweist und/oder
daß das PP-Homopolymer der mittleren Lage (4), einlagig extrudiert, bei einer Dicke von 50 µm eine Dehnung bei Streckgrenze in Maschinen- wie in Querrichtung (bestimmt nach ASTM 882-90) von höchstens 10 %, vorzugsweise höchstens 8 %, aufweist und/oder
daß das PP-Homopolymer der mittleren Lage (4), einlagig extrudiert, bei einer Dicke von 50 µm eine Reißfestigkeit von mindestens 50 MPa in Maschinenrichtung (bestimmt nach ASTM 882-90) und von mindestens 30 MPa in Querrichtung aufweist und/oder
daß das PP-Homopolymer der mittleren Lage (4), einlagig extrudiert, bei einer Dicke von 50 µm eine Reißdehnung in Maschinenrichtung (bestimmt nach ASTM 882-90) von mindestens 670 % aufweist.

10. Blumenverpackung nach einem der Ansprüche 1 bis 9, **dadurch gekennzeichnet, daß** das PP-Homopolymer der mittleren Lage (4), einlagig extrudiert, einen Glanz bei 60° (nach ASTM 2457) von mindestens 33 %, eine Trübung (nach ASTM 1003) von höchstens 20 % und eine Klarheit (nach ASTM 1746) von mindestens 80 % aufweist.
